# EUROPÄISCHE PATENTSCHRIFT

(11) **EP 3 959 181 B1**
(45) Veröffentlichungstag und Bekanntmachung des Hinweises auf die Patenterteilung: **12.08.2026**
(21) Anmeldenummer: 20706611.9
(22) Anmeldetag: 06.03.2020
(51) Int. Cl.: C03C 17/34, C03C 17/42

(54) **VERFAHREN ZUR HERSTELLUNG EINER SCHEIBE MIT EINER STRUKTURIERTEN BESCHICHTUNG**
METHOD FOR PRODUCING A PANE WITH A STRUCTURED COATING
PROCÉDÉ DE FABRICATION D'UNE VITRE DOTÉE D'UN REVÊTEMENT STRUCTURÉ

(30) Priorität: 25.04.2019 EP 19171014
(43) Veröffentlichungstag der Anmeldung: 02.03.2022
(73) Patentinhaber: Saint-Gobain Glass France, 92400 Courbevoie (FR)
(72) Erfinder: NSENGIMANA, Alice, 52068 Aachen (DE); SCHULZ, Daniel, 41065 Mönchengladbach (DE); FESSEMAZ, Alexandre, 52064 Aachen (DE); MOTEMANI, Yahya, 52070 Aachen (DE)
(74) Vertreter: SGR Germany-Patents
(86) Internationale Anmeldenummer: PCT/EP2020/055958
(87) Internationale Veröffentlichungsnummer: WO 2020/216514

(56) Entgegenhaltungen:
- EP-A1- 1 348 673
- FR-A1- 3 048 244
- US-A1- 2003 232 197
- US-A1- 2008 213 482

## Beschreibung

Die Erfindung betrifft ein Verfahren zur Herstellung einer Scheibe mit einer strukturierten Beschichtung.

Unter einer strukturierten Beschichtung wird im Sinne der Erfindung eine Beschichtung verstanden, die nicht vollflächig oder in Form einer in sich geschlossenen Fläche von einfacher geometrischer Form auf der Oberfläche eines Substrats aufgebracht. Stattdessen weist ein Substrat mit einer strukturierten Beschichtung beschichtete und unbeschichtete Bereiche auf, die insbesondere in Form eines regelmäßigen geometrischen Musters angeordnet sind, beispielsweise in Form von parallelen beschichteten Linien, zwischen denen unbeschichtete Bereiche angeordnet sind, als matrixartige Anordnung von beschichteten Punkten auf einer ansonsten unbeschichteten Oberfläche oder umgekehrt als Beschichtung mit matrixartig angeordneten punktförmigen beschichtungsfreien Bereichen. Für die vorliegende Erfindung sind besonders solche strukturierten Beschichtungen von Interesse, bei denen die beschichteten und unbeschichteten Bereiche Abmessungen im Mikrometerbereich aufweisen (beispielsweise die Linienbreite bei linienartigen Strukturen oder der Durchmesser und die Abstände bei punktartigen Strukturen). Solche strukturierten Beschichtungen sind an sich bekannt. Sie können beispielsweise eingesetzt werden, um die Oberfläche des Substrats mit gewünschten optischen Eigenschaften oder hydrophilen oder hydrophoben Eigenschaften zu versehen.

Es sind verschiedene Verfahren bekannt, strukturierte Beschichtungen zu erzeugen. So kann ein großer Bereich der Substratoberfläche beschichtet werden und die unbeschichteten Bereiche anschließend mittels mechanischer Entschichtung, Ätzen oder Laserverfahren erzeugt werden. Alternativ können lithographischen Verfahren, insbesondere Interferenzlithographie, zur Erzeugung der unbeschichteten Bereiche verwendet werden. Durch sogenannte "layer by layer"-Abscheidung oder bestimmte Sol-Gel-Verfahren lassen sich strukturierte Beschichtungen auch direkt ohne Entschichtungsschritt erzeugen. Auch durch stempelartige Methoden wie die sogenannte "UV curing nanoimprint"-Lithographie.

Alle diese Verfahren weisen allerdings gewisse Nachteile im Hinblick auf eine industrielle Verwendung auf. So sind einige Verfahren wie beispielsweise die Laserentschichtung nur zur Erzeugung solcher strukturierteren Beschichtungen sinnvoll einsetzbar, bei denen die unbeschichteten Bereich gegenüber den beschichteten Bereichen relativ kleine Abmessungen aufweisen. Andere Verfahren sind technisch sehr aufwendig oder nur auf kleine Substrate beziehungsweise auf kleine Bereiche von Substraten anwendbar.

FR3048244A1 offenbart ein Verfahren zur Herstellung einer Scheibe mit einer strukturierten Beschichtung, wobei eine strukturierte organische Markierungsbeschichtung aufgebracht wird, darauf eine Funktionsbeschichtung und die Maskierungsbeschichtung mit den darauf angeordneten Bereichen der Funktionsbeschichtung mittels Temperaturbehandlung entfernt wird. Ähnliche Verfahren sind aus US2008213482A1, EP1348673A1 und US2003232197A1 bekannt. Auch EP2105950A1 offenbart ein ähnliches Verfahren dieser Art.

Der vorliegenden Erfindung liegt die Aufgabe zugrunde, ein verbessertes Verfahren zur Herstellung von Scheiben mit strukturierten Beschichtungen bereitzustellen, das technisch vergleichsweise einfach zu realisieren ist sowie für vielfältige Strukturen und Substratgrößen anwendbar sein.

Die Aufgabe der vorliegenden Erfindung wird erfindungsgemäß durch ein Verfahren gemäß Anspruch 1 gelöst. Bevorzugte Ausführungen gehen aus den Unteransprüchen hervor.

Das erfindungsgemäße Verfahren zur Herstellung einer Scheibe mit einer strukturierten Beschichtung umfasst zumindest die folgenden Verfahrensschritte:
a) Ausbilden einer organischen, polymeren Maskierungsbeschichtung auf Maskierungsbereichen einer Oberfläche eines Glassubstrats, wobei Beschichtungsbereiche der Oberfläche des Glassubstrats nicht mit der Maskierungsbeschichtung versehen sind;
b) Aufbringen einer Funktionsbeschichtung auf die Oberfläche des Glassubstrats mittels vakuumbasierter Gasphasenabscheidung; und
c) Temperaturbehandlung des Glassubstrats bei einer Temperatur von mindestens 200 °C, wobei und wodurch die Maskierungsbeschichtung mit der darauf angeordneten Funktionsbeschichtung von der Oberfläche entfernt wird. Die Funktionsbeschichtung verbleibt dabei auf den Beschichtungsbereichen der Oberfläche.

Das erfindungsgemäße Verfahren erlaubt die Erzeugung großflächiger strukturierter Beschichtungen, die auch nicht auf bestimmte Arten von Strukturen beschränkt sind. Die zu erzeugenden Strukturen können leichter verändert werden als das beispielsweise bei Druckprozessen oder lithographischen Verfahren der Fall ist, so dass das erfindungsgemäße Verfahren sehr flexibel anwendbar ist. Die Flexibilität ist auch gegeben hinsichtlich des Bereichs des Glassubstrats, das mit der strukturierten Beschichtung versehen werden soll. Insbesondere ist das Verfahren technisch relativ einfach zu realisieren, weil es mit Elemente auskommt, die bei Glasherstellern ohnehin gebräuchlich sind. So ist die Beschichtung mittels vakuumbasierter Gasphasenabscheidung bei Glasherstellern etabliert und polymere Beschichtungen, die sich durch Temperaturbehandlungen entfernen lassen, sind beispielsweise zum Schutz von beschichteten Glasoberflächen während Transport, Lagerung und Handhabung der Gläser gebräuchlich. Eine solche polymere Beschichtung wird beispielsweise von der Firma Saint-Gobain als SGG EASYPRO^{®} vertrieben und eingesetzt. Das sind große Vorteile der vorliegenden Erfindung.

Unter einer strukturierten Beschichtung wird im Sinne der Erfindung eine Beschichtung verstanden auf einem Substrat verstanden, wobei das Substrat beschichtete und unbeschichtete Bereiche aufweist, wobei die beschichteten Bereiche derart auf der Substratoberfläche angeordnet sind, dass benachbarte beschichtete Bereiche einen Abstand voneinander aufweisen. Zwischen benachbarten beschichteten Bereichen befinden sich unbeschichtete Bereiche. Die beschichteten und unbeschichteten Bereiche sind gleichsam alternierend auf dem Substrat angeordnet. Anders ausgedrückt ist die Beschichtung durch unbeschichtete Bereiche (insbesondere regelmäßig) unterbrochen. Die beschichteten Bereiche sind insbesondere in Form eines regelmäßigen geometrischen Musters angeordnet, beispielsweise in Form von parallelen beschichteten Linien, zwischen denen unbeschichtete Bereiche angeordnet sind, als matrixartige Anordnung von beschichteten Punkten oder Flächen auf einer ansonsten unbeschichteten Oberfläche oder umgekehrt als Beschichtung mit matrixartig angeordneten beschichtungsfreien Bereichen in Form von Punkten oder Flächen.

Die zu beschichtende Oberfläche des Glassubstrats weist Maskierungsbereiche und Beschichtungsbereiche auf. Unter den Maskierungsbereichen werden diejenige Bereiche der Oberfläche verstanden, die später nicht mit der gewünschten Beschichtung (im Sinne der Erfindung als Funktionsbeschichtung bezeichnet) versehen werden sollen. Unter den Beschichtungsbereichen werden diejenigen Bereiche der Oberfläche verstanden, die später dauerhaft mit der gewünschten Beschichtung versehen werden sollen. Die Maskierungsbereiche oder die Beschichtungsbereiche können auch jeweils untereinander zusammenhängen, so dass streng genommen nur ein einzelner Bereich vorliegt statt einer Vielzahl von Bereichen.

Die Beschichtungsbereiche sind derart auf der Substratoberfläche angeordnet, dass benachbarte Beschichtungsbereiche einen Abstand voneinander aufweisen. Zwischen benachbarten Beschichtungsbereichen befinden sich Maskierungsbereiche. Dadurch ergibt sich die Struktur der Beschichtung. Die Beschichtungsbereiche sind bevorzugt in Form eines regelmäßigen Musters auf der Substratoberfläche angeordnet, aber prinzipiell sind auch unregelmäßige Strukturen herstellbar.

Zunächst wird eine strukturierte Maskierungsbeschichtung auf einer Oberfläche des Glassubstrats aufgebracht. Die Maskierungsbeschichtung ist organisch-polymerer Natur und wird auf den Maskierungsbereichen ausgebildet, während die Beschichtungsbereiche nicht mit der Maskierungsbeschichtung versehen sind. Dazu können die Beschichtungsbereiche von vorne herein vom Aufbringen der Maskierungsbeschichtung ausgenommen werden oder die Maskierungsbeschichtung kann im Anschluss auf ihre Aufbringung wieder von den Beschichtungsbereichen entfernt werden. Die Maskierungsbeschichtung bildet also gleichsam ein Negativ der gewünschten strukturierten Beschichtung, wobei die Maskierungsbereiche vollständig mit der Maskierungsbeschichtung bedeckt sind und die Beschichtungsbereiche vollständig von der Maskierungsbeschichtung frei bleiben.

Nachdem die Maskierungsbeschichtung auf der Oberfläche des Substrats erzeugt wurde, wird die Funktionsbeschichtung, also die letztendlich gewünschte Beschichtung, auf dieselbe Oberfläche des Substrats aufgebracht mittels vakuumbasierter Gasphasenabscheidung. Die Funktionsbeschichtung befindet sich dann in den Beschichtungsbereichen in Kontakt mit der Substratoberfläche und in den Maskierungsbereichen in Kontakt mit der Maskierungsbeschichtung, auf der sie aufgebracht ist.

Nachdem die Funktionsbeschichtung aufgebracht wurde, wird das Glassubstrat einer Temperaturbehandlung bei einer Temperatur von mindestens 200 °C unterzogen. Dabei wird die Maskierungsbeschichtung thermisch zersetzt und infolgedessen zusammen mit der auf der Maskierungsbeschichtung angeordneten Funktionsbeschichtung von der Oberfläche des Substrats entfernt. Die Funktionsbeschichtung verbleibt dagegen auf den Beschichtungsbereichen der Oberfläche des Substrats. Damit ist die gewünschte strukturierte Funktionsbeschichtung erzeugt.

Für die Maskierungsbeschichtung wird ein organisches, polymeres Material gewählt, dass geeignet ist, sich bei der abschließenden Temperaturbehandlung thermisch zu zersetzen, insbesondere rückstandfrei zu zersetzen. In einer besonders bewährten Ausführung wird die Maskierungsbeschichtung auf Basis eines UV-härtenden Lacks, insbesondere Acryllacks ausgebildet. Solche Lacke sind einfach aufzubringen und durch die abschließende Temperaturbehandlung gut zu entfernen. Zur Erzeugung der Maskierungsbeschichtung wird dabei eine Beschichtungslösung auf die Oberfläche des Substrats aufgebracht, welche die Polymer-Vorstufen (Monomere oder Oligomere) enthält, üblicherweise in einem Lösemittel, daneben optional weitere Zusätze wie Photosensibilisatoren und/oder Katalysatoren. Die Beschichtungslösung wird dann mit UV-Strahlung bestrahlt, wodurch eine Polymerisationsreaktion (insbesondere radikalische Polymerisation) in Gang gesetzt wird, bei der die Vorstufen zur polymeren Maskierungsbeschichtung vernetzt werden. Es sind alternativ aber auch andere Maskierungsbeschichtungen denkbar, beispielsweise auf Basis von thermisch härtenden Lacken, bei dem das Polymer in einem Lösungsmittel gelöst ist und sich als Maskierungsbeschichtung auf der Substratoberfläche niederschlägt, wenn das Lösemittel verdampft. In einer bevorzugten Ausführung enthält die Beschichtungslösung, sei sie auf Basis eines UV-härtenden oder thermisch härtenden Lacks ausgebildet, auch einen Haftvermittler, der die Haftung der Beschichtung auf der Glasoberfläche sicherstellt. Außer Acryllacken eignen sich beispielsweise auch Alkyd-, Polyester-, Epoxid-, Polyurethan-, Polystyrol-, Polyvinyl- oder Silikonharze.

Die Maskierungsbeschichtung weist bevorzugt eine Schichtdicke von 100 nm bis 20 µm auf, besonders bevorzugt von 500 nm bis 15 µm, beispielsweise etwa 10 µm. In diesem Bereich ist die Maskierungsbeschichtung einerseits ausreichend dick, um die Substratoberfläche verlässlich zu maskieren, und andererseits ausreichend dünn, um feine Strukturen ausbilden zu können und effektiv thermisch zersetzt werden zu können. Je feiner die auszubildenden Strukturen sind, desto dünner sollte die Maskierungsbeschichtung gewählt werden.

Die Funktionsbeschichtung wird erfindungsgemäß mittels vakuumbasierter Gasphasenabscheidung auf die Oberfläche des Substrats und die Maskierungsbeschichtung aufgebracht. In einer bevorzugten Ausgestaltung wird die Funktionsbeschichtung mittels physikalischer Gasphasenabscheidung (PVD) oder chemischer Gasphasenabscheidung (CVD) aufgebracht wird, insbesondere mittels physikalischer Gasphasenabscheidung. Besonders bewährt hat sich die Kathodenzerstäubung (*Sputtern*)*,* insbesondere die magnetfeldunterstütze Kathodenzerstäubung (*Magnetronsputtern*)*,* die zur Erzeugung von Dünnschichten auf Glassubstraten verbreitet ist. Es können aber auch andere Arten der physikalischen Gasphasenabscheidung verwendet werden, beispielsweise Thermisches Verdampfen (Bedampfen), Elektronenstrahlverdampfen, Laserstrahlverdampfen, Lichtbogenverdampfen oder Molekularstrahlepitaxie. Bevorzugt CVD-Verfahren sind die plasmaunterstützte chemische Gasphasenabscheidung (PECVD) und die Atomlagenabscheidung (ALD).

Die Funktionsbeschichtung wird bevorzugt als sogenannte Dünnschicht ausgebildet mit einer Schichtdicke im Mikro- beziehungsweise Nanometerbereich. Die Schichtdicke der Funktionsbeschichtung beträgt in einer bevorzugten Ausführung von 10 nm bis 50 µm, besonders bevorzugt von 50 nm bis 20 µm. Damit werden besonders gute Ergebnisse erzielt. Die genaue Schichtdicke hängt von der angestrebten Funktion der Beschichtung ab und kann vom Fachmann geeignet gewählt werden.

Die Funktionsbeschichtung ist in einer bevorzugten Ausführung auf Basis eines Metalls, eines Metalloxids oder eines Metallnitrids ausgebildet. Der Ausdruck Metall schließt im Sinne der Erfindung auch Halbmetalle ein. Geeignete Materialien, die sich als Beschichtung auf Glassubstraten bewährt haben, sind beispielsweise Silber (Ag), Silizium (Si), Aluminium (AI), Zinn (Sn), Zink (Zn), Zirkonium (Zr), Vanadium (V) oder Titan (Ti) sowie deren Nitride und Oxide, Nickel-Chrom-Legierung (NiCr). Auch Mischungen, Legierungen oder gegenseitige Dotierungen der genannten Materialien sind möglich, beispielsweise als Silizium-Zirkonium-Nitrid (SiZrN), Zinn-Zink-Oxid (SnZnO) oder Aluminiumdotiertes Siliziumnitrid (SiN:Al). Nitride und Oxide können stöchiometrisch, unterstöchiometrisch oder überstöchiometrisch ausgebildet werden. Die Wahl des Materials für die Funktionsbeschichtung hängt insbesondere von den Erfordernissen des Einzelfalls ab und kann vom Fachmann der vorgesehenen Anwendung entsprechend geeignet gewählt werden.

Unterhalb der eigentlichen Funktionsbeschichtung können auch weitere Beschichtungen aufgebracht werden, beispielsweise Haftvermittlerschichten, um die Haftung der Funktionsbeschichtung auf dem Substrat zu verbessern, Anpassungs- oder Glättungsschichten, um die Morphologie der Funktionsbeschichtung zu beeinflussen, oder Blockerschichten, um Alkalidiffusion vom Glassubtrat in die Funktionsschicht zu verhindern. Geeignete Haftvermittlerschichten sind beispielsweise auf Basis von Siliziumnitrid (SiN) oder -oxid (SiO) oder Aluminiumnitrid (AIN) oder -oxid (AIO) ausgebildet, geeignete Anpassungsschichten beispielsweise auf Basis von SnZnO oder Zinkoxid (ZnO), geeignete Blockerschichten beispielsweise auf Basis von NiCr oder SiN.

Soll die endgültige Funktionsbeschichtung auf Basis eines Metalloxids ausgebildet sein, so kann in Verfahrensschritt (b) auch zunächst das reine Metall aufgebracht werden, welches später vollständig oder teilweise zum Metalloxid oxidiert wird, beispielsweise während der abschließenden Temperaturbehandlung.

Die Temperaturbehandlung in Verfahrensschritt (c) erfolgt erfindungsgemäß bei einer Temperatur von mindestens 200 °C, bevorzugt mindestens 300 °C, besonders bevorzugt mindestens 400 °C, ganz besonders bevorzugt von mindestens 500 °C. Bei solchen Temperaturen werden übliche polymere Maskierungsbeschichtungen wirkungsvoll thermisch zersetzt. Die Temperatur im Einzelfall kann in Abhängigkeit vom eingesetzten Material der Maskierungsschicht geeignet gewählt werden, um eine vollständige und schnelle Zersetzung zu gewährleisten. In einer besonders vorteilhaften Ausführung erfolgt die Temperaturbehandlung im Rahmen eines Vorspannprozesses, bei dem das Glassubstrat thermisch vorgespannt wird. Bei einem solchen Vorspannprozess wird das Glassubstrat erwärmt, typischerweise bis knapp unter Erweichungstemperatur, und dann schnell abgekühlt (abgeschreckt). Dadurch bilden sich charakteristische Spannungen im Glassubstrat aus (Druckspannungen an den Oberflächen, Zugspannungen im Kern), wodurch die Bruchfestigkeit des Glases verbessert wird. Außerdem zerfällt das Glassubstrat im Falle eines Glasbruchs oder der Penetration der zentralen Zugspannungszone mit einem spitzen Gegenstand in Form sehr kleiner Fragmente, von denen nur eine geringe Verletzungsgefahr ausgeht. Typische Temperaturen zum Erwärmen des Glassubstrats betragen von 600 °C bis 800 °C, beispielsweise 640 °C, 690 °C oder 750 °C. Das Abschrecken des Glases erfolgt typischerweise durch Beaufschlagen mit einem Luftstrom.

Die Beschichtungsbereiche und Maskierungsbereiche können in jeder beliebigen Form erzeugt werden, die der Fachmann in Abhängigkeit von der Anwendung im Einzelfall wählen kann. Diese Flexibilität ist ein großer Vorteil der Erfindung. In einer vorteilhaften Ausführung sind die Beschichtungsbereiche in Form eines regelmäßigen Musters angeordnet, besonders bevorzugt als zueinander parallele Linien oder punktförmig beziehungsweise kreisförmig in einer matrix- oder rasterartigen Anordnung. Sind die Beschichtungsbereiche in Form paralleler Linien ausgebildet, so sind benachbarte Beschichtungsbereiche jeweils durch einen Maskierungsbereich, welcher ebenfalls linienartig ausgebildet ist, getrennt. Sind die Beschichtungsbereiche in Form einer Matrix aus Punkten angeordnet, so bilden die Maskierungsbereiche einen zusammenhängenden Bereich um die Beschichtungsbereiche herum. Die Breite der Beschichtungsbereiche sowie die Abstände benachbarter Beschichtungsbereiche betragen für typische Anwendungen strukturierter Beschichtungen bevorzugt von 10 µm bis 1 mm, besonders bevorzugt von 25 µm bis 500 µm. Unter der Breite wird die Ausdehnung entlang der kürzesten Längendimension verstanden, also die Linienbreite beziehungsweise der Kreisdurchmesser der Beschichtungsbereiche im Falle von linien- oder kreisförmigen Beschichtungsbereichen. Die Abstände werden von der Mitte der Beschichtungsbereiche ausgehend gemessen, also im Falle von linienartigen Beschichtungsbereichen von der Mitte der Linien, gemessen senkrecht zur Erstreckungsrichtung der Linien, und im Falle von kreisförmigen Beschichtungsbereichen ausgehend vom Kreismittelpunkt.

Die strukturierte Beschichtung kann sich im Wesentlichen über die gesamte Oberfläche des Substrats erstrecken, so dass die Beschichtungsbereiche über die gesamte Oberfläche verteilt sind. Es ist aber ebenso möglich, nur einen Teil der Oberfläche des Substrats mit der strukturierten Beschichtung zu versehen, während andere Bereiche der Oberfläche keine Beschichtungsbereiche aufweisen.

Die Ausbildung der strukturierten Maskierungsbeschichtung in Verfahrensschritt (a) ist auf verschiedene Arten realisierbar. In einer ersten erfindungsgemäßen Ausführung des erfindungsgemäßen Verfahrens wird zunächst eine organische Beschichtungslösung auf die Maskierungsbereiche und die Beschichtungsbereiche aufgebracht und anschließend wird die Maskierungsbeschichtung großflächig aus der Beschichtungslösung gebildet. Insbesondere wird die Beschichtungslösung polymerisiert und/oder getrocknet, wobei die Maskierungsbeschichtung auf den Maskierungsbereichen und den Beschichtungsbereichen erzeugt wird. Besonders bevorzugt wird die Maskierungsbeschichtung auf der gesamten Oberfläche des Substrats vollflächig erzeugt. Anschließend wir die Maskierungsbeschichtung mittels Laserstrahlung von den Beschichtungsbereichen entfernt, insbesondere vollständig entfernt, so dass sie lediglich auf den Maskierungsbereichen verbleibt.

Ist die Maskierungsbeschichtung auf Basis eines UV-härtenden Lacks ausgebildet, so erfolgt die Schichtbildung durch Bestrahlung mit UV-Strahlung, beispielsweise mit einer Wellenlänge von 250 nm bis 400 nm, wodurch eine Polymerisation in Gang gesetzt wird, welche die Maskierungsbeschichtung erzeugt. Die Bestrahlung erfolgt bevorzugt großflächig mittels einer UV-Lampe.

Die Entfernung der Maskierungsbeschichtung von den Beschichtungsbereichen erfolgt mit einem Laser mit einer Wellenlänge, bei der die Maskierungsbeschichtung absorbiert. Für typische organische Maskierungsbeschichtungen eignen sich insbesondere Wellenlängen von 250 nm bis 600 nm, bevorzugt von 300 nm bis 500 nm, besonders bevorzugt von 300 nm bis 400 nm. Es kann beispielsweise ein frequenzverdoppelter oder -verdreifachter Nd:YAG-Laser verwendet werden, der weit verbreitet und bewährt ist, aber auch andere Arten von Lasern wie beispielsweise Farbstofflaser, Halbleiterlaser oder Faserlaser sind einsetzbar.

Der Laser wird in einer vorteilhaften Ausgestaltung gepulst betrieben, bevorzugt mit Pulsen im Nanosekunden- oder Femtosekundenbereich. Dabei beträgt die Pulsenergie bevorzugt von 20 µJ/Puls bis 250 µJ/Puls, besonders bevorzugt von 50 µJ/Puls bis 200 µJ/Puls. In diesem Bereich wird eine besonders effiziente Laserentschichtung erreicht. Die Pulsenergie kann durch die Ausgangsleistung des Lasers sowie die Pulsfolgefrequenz und Pulslänge eingestellt werden. Die Ausgangsleistung beträgt bevorzugt von 1 W bis 40 W (im Falle von Nanosekunden-Pulsen beispielsweise 1 W bis 10 W oder 3 W bis 6 W, im Falle von Femtosekundenpulsen beispielsweise 20 W bis 30 W), die Pulsfolgefrequenz bevorzugt von 10 kHz bis 100 kHz bevorzugt von 20 kHz bis 50 kHz.

Die Fläche des Laserspots auf der Maskierungsbeschichtung ist abhängig von den Abmessungen der Beschichtungsbereiche und sollte an diese angepasst werden, um die gesamte Breite des Beschichtungsbereichs möglichst abzudecken. So ist eine zeitsparende Entschichtung möglich. Der Durchmesser des Laserspots beträgt für typische Anwendungen bevorzugt von 1 µm bis 100 µm, besonders bevorzugt von 5 µm bis 50 µm, ganz besonders bevorzugt von 8 µm bis 30 µm. In einer vorteilhaften Ausführung sollte die Leistungsdichte der Laserstrahlung auf der Maskierungsbeschichtung von 1 kW/mm² bis 10 kW/mm² betragen, insbesondere von 1 kW/mm² bis 7,5 kW/mm². Damit wird eine besonders effiziente Laserentschichtung erreicht, ohne das Glassubstrat zu sehr zu beanspruchen. Die Leistungsdichte errechnet sich aus der Leistung der Laserstrahlung, geteilt durch die Ausdehnung der Laserstrahlung auf der opaken Beschichtung ausgedrückt als Flächeninhalt ("Fläche des Laserspots").

Insbesondere wenn die Beschichtungsbereiche linienartig ausgebildet sind, wird die Strahlung des Lasers wird mit einer Geschwindigkeit von 0,5 m/s bis 5 m/s, besonders bevorzugt von 0,6 m/s bis 3 m/s, beispielsweise von 0,6 m/s bis 0,8 m/s über die Maskierungsbeschichtung beziehungsweise das Glassubstrat bewegt. Das ist besonders vorteilhaft im Hinblick auf eine zeitsparende und trotzdem vollständige Entschichtung. Damit ist die Relativbewegung gemeint, die durch Bewegung der Strahlung, Bewegung des Substrats oder eine Kombination von beidem erreicht werden kann. Bevorzugt bleibt das Substrat bei der Entschichtung ortsfest, während die Laserstrahlung bewegt wird. Sind die Beschichtungsbereiche punktartig ausgebildet, so kann die Laserstrahlung auch deutlich langsamer bewegt werden, beispielsweise von 1 bis 50 mm/s. Im Idealfall werden die punktartigen Beschichtungsbereiche ohne Bewegung des Lasers durch ortsfeste Bestrahlung erzeugt, wenn die Größe des Laserspots auf die Größe der Beschichtungsbereiche abgestimmt ist.

Die Strahlung des Lasers wird bevorzugt mittels zumindest eines optischen Elements, beispielsweise einer Linse oder eines Objektivs auf die Maskierungsbeschichtung fokussiert. Besonders geeignet sind f-theta-Linsen oder f-theta-Objektive. Diese führen dazu, dass die Foki der Laserstrahlung bei unterschiedlichen Austrittswinkeln in einer Ebene angeordnet sind und ermöglichen eine konstante Bewegungsgeschwindigkeit der Laserstrahlung über die Beschichtung. Zwischen dem Laser und dem fokussierenden optischen Element kann die Strahlung des Lasers durch zumindest einen Lichtwellenleiter, beispielsweise eine Glasfaser geleitet werden. Es können auch weitere optische Elemente im Strahlengang des Lasers angeordnet sein, beispielsweise Kollimatoren, Blenden, Filter oder Elemente zur Frequenzverdopplung.

Die Bewegung der Strahlung des Lasers erfolgt bevorzugt durch zumindest einen Spiegel, der mit einem bewegbaren Bauteil verbunden ist. Durch das bewegbare Bauteil kann der Spiegel in zwei Richtungen, bevorzugt zwei zueinander orthogonalen Richtungen, besonders bevorzugt horizontal und vertikal, verkippt werden. Die Bewegung der Strahlung des Lasers kann auch durch mehrere mit jeweils einem bewegbaren Bauteil verbundene Spiegel erfolgen. Beispielsweise kann die Bewegung der Strahlung des Lasers durch zwei Spiegel erfolgen, wobei ein Spiegel in horizontaler Richtung und der andere Spiegel in vertikaler Richtung verkippt werden kann.

Die vorstehend beschriebene erste erfindungsgemäße Ausführungsform eignet sich insbesondere dann, wenn die Abmessungen der Beschichtungsbereiche relativ klein sind. Die feinen Beschichtungsbereiche können nämlich mittels des Lasers effizient in die großflächige Maskierungsbeschichtung eingebracht werden. Die Abmessungen der Beschichtungsbereiche können gegenüber denen der Maskierungsbereiche klein sein (also die Abstände benachbarter Beschichtungsbereiche im Vergleich zu ihrer Abmessung groß sein) oder in derselben Größenordnung liegen. In einer vorteilhaften Ausführung beträgt die Breite der Beschichtungsbereiche (beispielsweise die Linienbreiten im Falle von linienartigen Beschichtungsbereichen und die Kreisdurchmesser im Falle von punktartigen Beschichtungsbereichen) von 5 µm bis 100 µm, bevorzugt von 10 µm bis 50 µm, und die Abstände benachbarter Beschichtungsbereiche von 5 µm bis 1 mm (beispielsweise von 100 µm bis 1 mm), bevorzugt von 10 µm bis 500 µm (beispielsweise von 10 µm bis 150 µm oder von 150 µm bis 500 µm). Es sind aber auch größere Beschichtungsbereiche erzeugbar, wozu die Laserstrahlung bevorzugt rasterartig über den Beschichtungsbereich bewegt wird.

In einer zweiten erfindungsgemäßen Ausführung des erfindungsgemäßen Verfahrens wird zunächst eine organische Beschichtungslösung auf die Maskierungsbereiche und die Beschichtungsbereiche aufgebracht. Anschließend wird die Maskierungsbeschichtung lediglich in den Maskierungsbereichen mittels Laserstrahlung aus der Beschichtungslösung gebildet, insbesondere wird die Beschichtungslösung mittels Laserstrahlung in den Maskierungsbereichen polymerisiert und/oder getrocknet, so dass die Maskierungsbereiche mit der Maskierungsbeschichtung versehen sind, insbesondere vollständig versehen sind, während in den Beschichtungsbereichen die unverarbeitete (insbesondere unpolymerisierte) Beschichtungslösung verbleibt. Die Beschichtungslösung wird anschließend von den Beschichtungsbereichen entfernt.

Ist die Maskierungsbeschichtung auf Basis eines UV-härtenden Lacks ausgebildet, so weist die Laserstrahlung zur Schichtbildung sinnvollerweise eine Wellenlänge im UV-Bereich auf, bevorzugt von 250 nm bis 400 nm. Es kann beispielsweise ein frequenzverdreifachter Nd:YAG-Laser (355 nm) verwendet werden. Es sind aber auch Lacke bekannt, die mit Wellenlängen bis zu 1000 nm polymerisiert werden können.

Der Laser kann im Dauerstrichmodus betrieben werden oder gepulst. Wird er gepulst betrieben, so beträgt die Pulsenergie bevorzugt von 1 nJ/Puls bis 100 nJ/Puls, besonders bevorzugt von 2 nJ/Puls bis 10 nJ/Puls. In diesem Bereich wird eine effiziente Schichtbildung erreicht, ohne Substrat oder Maskierungsbeschichtung zu schädigen. Die Ausgangsleistung beträgt bevorzugt von 0,1 W bis 10 W, die Pulsfolgefrequenz bevorzugt von 1 kHz bis 250 MHz, bevorzugt von 100 kHz bis 1 MHz.

Die Fläche des Laserspots auf der Beschichtungslösung ist abhängig von den Abmessungen der Maskierungsbereiche und sollte an diese angepasst werden, um die gesamte Breite des Maskierungsbereichs möglichst abzudecken. So ist eine zeitsparende Schichtbildung möglich. Der Durchmesser des Laserspots beträgt für typische Anwendungen bevorzugt von 5 µm bis 50 µm, besonders bevorzugt von 8 µm bis 30 µm. In einer vorteilhaften Ausführung sollte die Leistungsdichte der Laserstrahlung auf der Beschichtungslösung von 10 µW/mm² bis 200 kW/mm², bevorzugt von 20 µW/mm² bis 45 kW/mm² betragen. Damit werden besonders gute Ergebnisse erzielt.

Die Strahlung des Lasers wird bevorzugt mit einer Geschwindigkeit von 0,5 m/s bis 5 m/s, besonders bevorzugt von 0,6 m/s bis 3 m/s, ganz besonders bevorzugt von 0,6 m/s bis 1 m/s, beispielsweise von 0,6 m/s bis 0,8 m/s über das Glassubstrat bewegt. Das ist besonders vorteilhaft im Hinblick auf eine zeitsparende und trotzdem vollständige Schichtbildung. Damit ist die Relativbewegung gemeint, die durch Bewegung der Strahlung, Bewegung des Substrats oder eine Kombination von beidem erreicht werden kann. Bevorzugt bleibt das Substrat ortsfest, während die Laserstrahlung bewegt wird.

Die Strahlung des Lasers wird auch hier bevorzugt mittels zumindest eines optischen Elements, beispielsweise einer Linse oder eines Objektivs auf die Beschichtungslösung fokussiert, insbesondere mittels einer f-theta-Linse oder eines f-theta-Objektivs. Die Bewegung der Strahlung des Lasers erfolgt auch hier bevorzugt durch zumindest einen beweglichen Spiegel, insbesondere Lasers durch zwei Spiegel erfolgen, wobei ein Spiegel in horizontaler Richtung und der andere Spiegel in vertikaler Richtung verkippt werden kann.

Die vorstehend beschriebene zweite erfindungsgemäße Ausführungsform eignet sich insbesondere dann, wenn die Abmessungen der Maskierungsbereiche relativ klein sind. Die feinen Maskierungsbereiche können nämlich mittels des Lasers effizient mit der Maskierungsbeschichtung versehen werden. Die Abmessungen der Beschichtungsbereiche können gegenüber denen der Maskierungsbereiche groß sein (also die Abstände benachbarter Beschichtungsbereiche im Vergleich zu ihrer Abmessung klein sein) oder in derselben Größenordnung liegen. In einer vorteilhaften Ausführung beträgt die Breite der Beschichtungsbereiche (beispielsweise die Linienbreiten im Falle von linienartigen Beschichtungsbereichen und die Kreisdurchmesser im Falle von punktartigen Beschichtungsbereichen) von 5 µm bis 1 mm, bevorzugt von 100 µm bis 1 mm, besonders bevorzugt von 150 µm bis 500 µm, und die Abstände benachbarter Beschichtungsbereiche von 5 µm bis 100 µm, bevorzugt von 10 µm bis 80 µm, besonders bevorzugt von 25 µm bis 50 µm. Es sind aber auch größere Maskierungsbereiche erzeugbar, wozu die Laserstrahlung bevorzugt rasterartig über den Maskierungsbereich bewegt wird.

Das Entfernen der Beschichtungslösung von den Beschichtungsbereichen kann beispielsweise durch einfaches mechanisches Abwischen erfolgen. Bevorzugt wird die Beschichtungslösung aber mit einem Lösungsmittel entfernt, insbesondere abgewischt oder abgespült, besonders bevorzugt einem organischen Lösungsmittel. Das Lösungsmittel wird geeignet ausgewählt, um die unverarbeitete Beschichtungslösung von den Beschichtungsbereichen effizient zu entfernen, ohne die erzeugte Maskierungsbeschichtung in den Maskierungsbereichen anzugreifen. Bei typischen Maskierungsbeschichtungen eigenen sich insbesondere beispielsweise Toluol, Ethylacetat, Aceton, Dimethylsufoxid (DMSO), N-Methyl-2-pyrrolidon (NMP) oder Dimethylformamid (DMF), insbesondere dann, wenn die Maskierungsbeschichtung auf Basis eines Acryllacks ausgebildet ist.

Das Glassubstrat ist aus Glas- oder Glaskeramik gefertigt. In einer vorteilhaften Ausführung ist das Glassubstrat aus Kalk-Natron-Glas gefertigt, das als Fensterglas üblich ist. Aber auch andere Glasarten sind denkbar, beispielsweise Borosilikatglas, Aluminosilikatglas oder Quarzglas. Die Dicke des Glassubstrats kann den Anforderungen im Einzelfall entsprechend frei gewählt werden. Typische Dicken liegen im Bereich von 2 mm bis 20 mm, insbesondere 3 mm bis 6 mm. Das Glassubstrat kann plan oder in eine oder mehrere Richtungen des Raums gebogen sein. Das Glassubstrat kann auch Teil einer Verbundscheibe sein, wobei das Glassubstrat über eine thermoplastische Zwischenschicht (insbesondere einer PVB-EVA oder PU-Folie) mit einer weiteren Scheibe verbunden ist.

In einer vorteilhaften Ausgestaltung ist die strukturierte Funktionsbeschichtung dazu geeignet und vorgesehen, die Scheibe mit hydrophoben oder superhydrophoben Eigenschaften zu versehen. Im Falle von hydrophoben Eigenschaften beträgt der Kontaktwinkel eines Wassertropfens größer 90°, im Falle von superhydrophoben Eigenschaften größer 150°. In einer weiteren vorteilhaften Ausgestaltung kann die Scheibe durch die strukturierte Funktionsbeschichtung mit gewünschten optischen Eigenschaften versehen werden, beispielsweise mit einer Reflexionsfarbe, einem bestimmten Streuverhalten oder einer erhöhten oder verminderten Lichtabsorption. Solche Anwendungen für strukturierte Beschichtungen sind an sich bekannt und der Fachmann kann die Ausgestaltung der Beschichtung hinsichtlich Material und Schichtdicken den Anforderungen des Einzelfalls entsprechen wählen. Es sind aber auch andere Anwendungen denkbar, welche mit strukturierten Beschichtungen realisiert werden können.

Die erfindungsgemäße Scheibe mit der strukturierten Beschichtung wird bevorzugt verwendet im Fahrzeug-, Architektur- oder Haushaltsbereich. Sie kann beispielsweise vorgesehen sein als Fensterscheibe eines Fahrzeugs oder eines Gebäudes, als Glasdach, als Kühlschranktür oder als Duschkabine. Solche Anwendungen profitieren besonders von hydrophoben Eigenschaften oder einstellbaren optischen Eigenschaften. Eine hydrophobe Kühlschranktür kann beispielsweise eine geringe Neigung zum Beschlagen aufweisen, an einer hydrophoben Duschkabine sammelt sich weniger Flüssigkeit und ein hydrophobes Glasdach erleichtert das Abrutschen von Schnee.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine Scheibe mit einer strukturierten Beschichtung,
- Fig. 2: eine Draufsicht auf eine weitere Scheibe mit einer strukturierten Beschichtung,
- Fig. 3: eine Ausführungsform zur Erzeugung der erfindungsgemäßen strukturierten Maskierungsbeschichtung,
- Fig. 4: eine weitere Ausführungsform zur Erzeugung der erfindungsgemäßen strukturierten Maskierungsbeschichtung,
- Fig. 5: die erfindungsgemäße Herstellung einer strukturierten Beschichtung ausgehend von der Scheibe aus Fig. 2,
- Fig. 6: ein Flussdiagramm einer Ausführungsform des erfindungsgemäßen Verfahrens,
- Fig. 7: ein Flussdiagramm einer weiteren Ausführungsform des erfindungsgemäßen Verfahrens,
- Fig. 8: eine Draufsicht auf eine weitere Scheibe mit einer strukturierten Beschichtung.

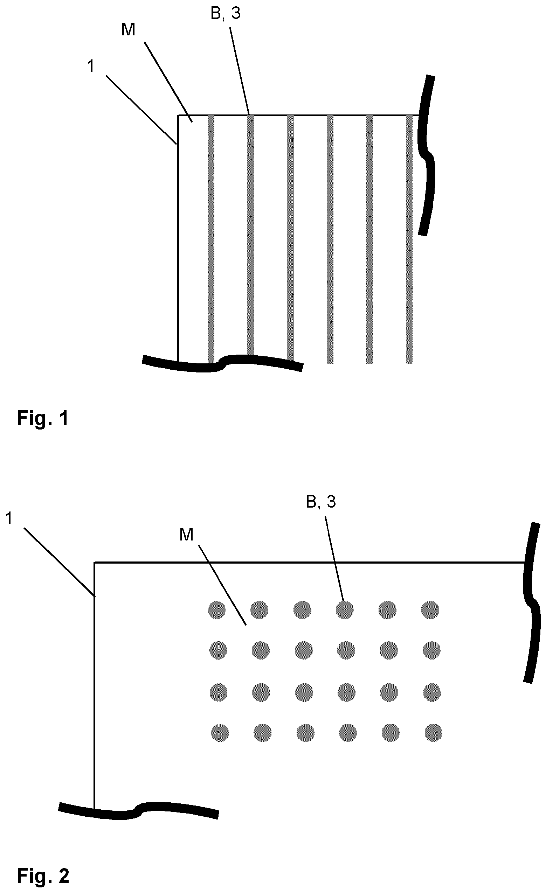

Fig. 1 zeigt beispielhaft einen Ausschnitt einer Scheibe mit einer strukturierten Beschichtung, die mit dem erfindungsgemäßen Verfahren hergestellt werden kann. Die Scheibe umfasst ein planes Glassubstrat 1 aus Kalk-Natron-Glas mit einer Dicke von beispielsweise 4 mm. Eine Oberfläche des Glassubstrats 1 weist Maskierungsbereiche M und Beschichtungsbereiche B auf, die in Form alternierender, zueinander paralleler Linien angeordnet sind, so dass benachbarte Beschichtungsbereiche B jeweils durch einen Maskierungsbereich M voneinander getrennt sind. Die parallelen Linien erstrecken sich beispielsweise über die gesamte Oberfläche des Glassubstrats 1, können aber auch nur einen Teilbereich der Oberfläche abdecken. Die Beschichtungsbereiche B weisen beispielsweise eine Breite (Linienbreite) von etwa 50 µm auf, die Maskierungsbereich M von etwa 150 µm.

Die Beschichtungsbereich B sind vollständig mit einer Funktionsbeschichtung 3 versehen. Die Funktionsbeschichtung 3 ist beispielsweise aus Titanoxid (TiO) mit einer Schichtdicke von etwa 10 µm ausgebildet und über eine 50 nm dicke Haftschicht auf Basis von Siliziumnitrid mit der Oberfläche des Glassubstrats 1 verbunden. Strukturierte Beschichtungen der dargestellten Art können beispielsweise dazu verwendet werden, die Glasoberfläche mit superhydrophoben Eigenschaften zu versehen, so dass Flüssigkeitstropfen von der Oberfläche abperlen.

Fig. 2 zeigt beispielhaft einen Ausschnitt einer weiteren Scheiben mit einer strukturierten Beschichtung, die mit dem erfindungsgemäßen Verfahren hergestellt werden kann. Die Beschichtungsbereiche B mit der Funktionsbeschichtung 3 sind hier punktartig (genauer gesagt als Vollkreise) ausgebildet und matrixartig, also in Zeilen und Spalten, angeordnet. Die strukturierte Beschichtung erstreckt sich hier nicht über die gesamte Oberfläche des Glassubstrats 1, sondern nur über einen Teilbereich, der mit bestimmten Eigenschaften versehen werden soll. Die Maskierungsbereiche M bilden einen zusammenhängenden Bereich um die Beschichtungsbereiche B beziehungsweise die Funktionsbeschichtung 3 herum. Die Beschichtungsbereiche B mit der Funktionsbeschichtung 3 weisen beispielsweise einen Durchmesser von 50 µm auf und einen gegenseitigen Abstand (von Zentrum zu Zentrum) von beispielsweise 150 µm.

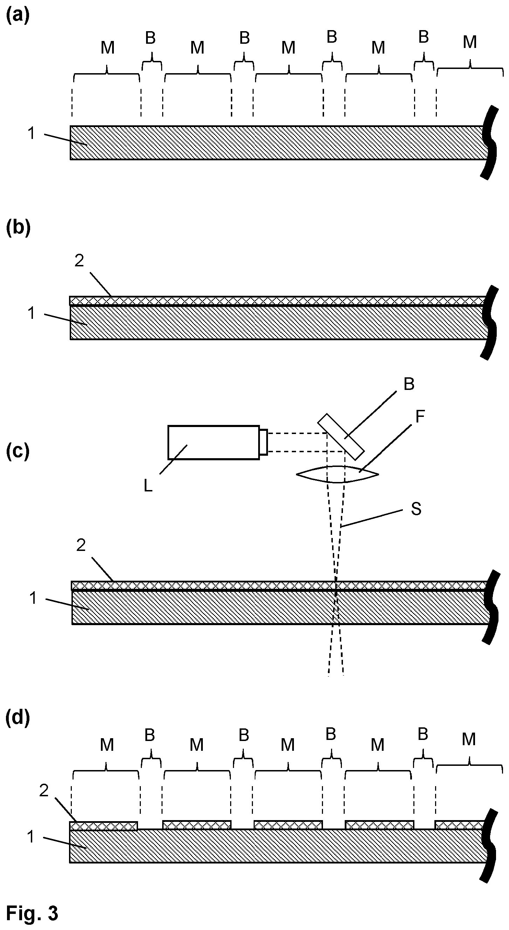

Fig. 3 zeigt eine Scheibe zu verschiedenen Zeitpunkten während der Herstellung einer strukturierten polymeren Maskierungsbeschichtung 2 (erste bevorzugte Ausführung). Die Maskierungsbeschichtung 2 ist gleichsam das Negativ der geplanten strukturierten Funktionsbeschichtung 3. Zunächst wird das Glassubstrat 1 mit den geplanten Maskierungsbereichen M und Beschichtungsbereichen B bereitgestellt (Teil a). Auf einer Oberfläche des Glassubstrats 1 wird vollflächig eine Maskierungsbeschichtung 2 erzeugt (Teil b). Dazu wird die Oberfläche mit einer Beschichtungslösung versehen und großflächig mit einer UV-Lampe bestrahlt (nicht dargestellt), wodurch die Bestandteile der Beschichtungslösung zu einem Acryllack vernetzt werden, der die Maskierungsbeschichtung 2 bildet. Die Maskierungsbeschichtung 2 hat beispielsweise eine Schichtdicke von 10 µm. Die Maskierungsbeschichtung 2 wird anschließend mittels der Strahlung S eines Lasers L von den Beschichtungsbereichen B entfernt (Teil c) und verbleibt nur auf den Maskierungsbereichen M, wodurch die angestrebte strukturierte Maskierungsbeschichtung 2 erzeugt wird (Teil d). Der Laser L ist beispielsweise ein frequenzverdreifachter Nd:YAG-Laser mit einer Wellenlänge von 355 nm. Seine Strahlung S wird mittels eines fokussierenden Elements F, beispielsweise einer Linse oder eines Objektivs, auf die Oberfläche des Glassubstrats 1 fokussiert und mittels eines oder mehrere beweglicher Spiegel B mit einer Geschwindigkeit von beispielsweise 0,75 m/s entlang der linienförmigen Beschichtungsbereiche B bewegt, um die Maskierungsbeschichtung 2 zu entfernen. Der Laser wird gepulst betrieben mit einer Pulsenergie von beispielsweise 100 µJ/Puls. Die Größe des Laserspots auf der Oberfläche ist so gewählt, dass die Breite der Beschichtungsbereiche B abgedeckt ist und die gesamte Maskierungsbeschichtung 2 entfernt wird, wenn die Strahlung S einmal entlang des linienförmigen Beschichtungsbereichs B bewegt wird.

Die dargestellte erste bevorzugte Ausführungsform eignet sich besonders für den Fall, dass die Maskierungsbereiche M breiter ausgebildet sind als die Beschichtungsbereiche B.

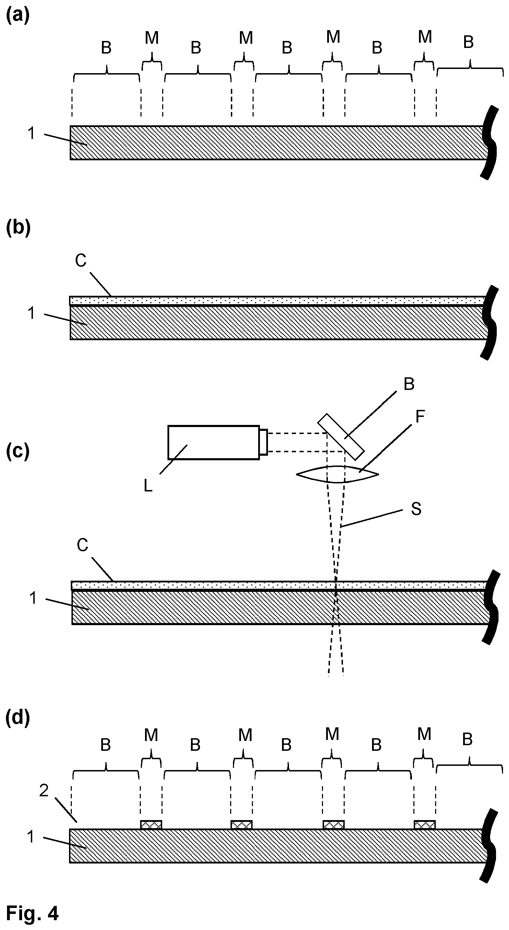

Fig. 4 zeigt eine Scheibe zu verschiedenen Zeitpunkten während der Herstellung einer strukturierten polymeren Maskierungsbeschichtung 2 gemäß einem alternativen Verfahren (zweite bevorzugte Ausführung). Zunächst wird wiederum das Glassubstrat 1 mit den geplanten Maskierungsbereichen M und Beschichtungsbereichen B bereitgestellt (Teil a). Auf einer Oberfläche des Glassubstrats 1 wird vollflächig eine Beschichtungslösung C aufgebracht. (Teil b). Anschließend wird die Beschichtungslösung C in den Maskierungsbereichen M mittels der ultravioletten Strahlung S eines Lasers L zu einem Acryllack vernetzt, der die Maskierungsbeschichtung 2 bildet (Teil c). Der Laser L ist beispielsweise ein frequenzverdreifachter Nd:YAG-Laser mit einer Wellenlänge von 355 nm. Seine Strahlung S wird mittels eines fokussierenden Elements F, beispielsweise einer Linse oder eines Objektivs, auf die Oberfläche des Glassubstrats 1 fokussiert und mittels eines oder mehrere beweglicher Spiegel B mit einer Geschwindigkeit von beispielsweise 0,75 m/s entlang der linienförmigen Maskierungsbereiche M bewegt, um die Maskierungsbeschichtung 2 zu bilden. Der Laser wird gepulst betrieben mit einer Pulsenergie von beispielsweise 4 nJ/Puls. Die Größe des Laserspots auf der Oberfläche ist so gewählt, dass die Breite der Maskierungsbereiche M abgedeckt ist und die gesamte Beschichtungslösung C zur Maskierungsbeschichtung 2 vernetzt wird, wenn die Strahlung S einmal entlang des linienförmigen Maskierungsbereichs M bewegt wird.

Nachdem die Maskierungsbereiche M mittels des Lasers L mit der Maskierungsbeschichtung 2 versehen wurde, verbleibt in den Beschichtungsbereichen B die nicht reagierte Beschichtungslösung C (nicht dargestellt). Diese wird im Anschluss entfernt, beispielsweise mit einem organischen Lösungsmittel wie Toluol abgewischt oder abgespült. Es verbleibt die strukturierte Maskierungsbeschichtung 2 auf den Maskierungsbereichen M (Teil d).

Die dargestellte zweite bevorzugte Ausführungsform eignet sich besonders für den Fall, dass die Beschichtungsbereiche B breiter ausgebildet sind als die Maskierungsbereiche M.

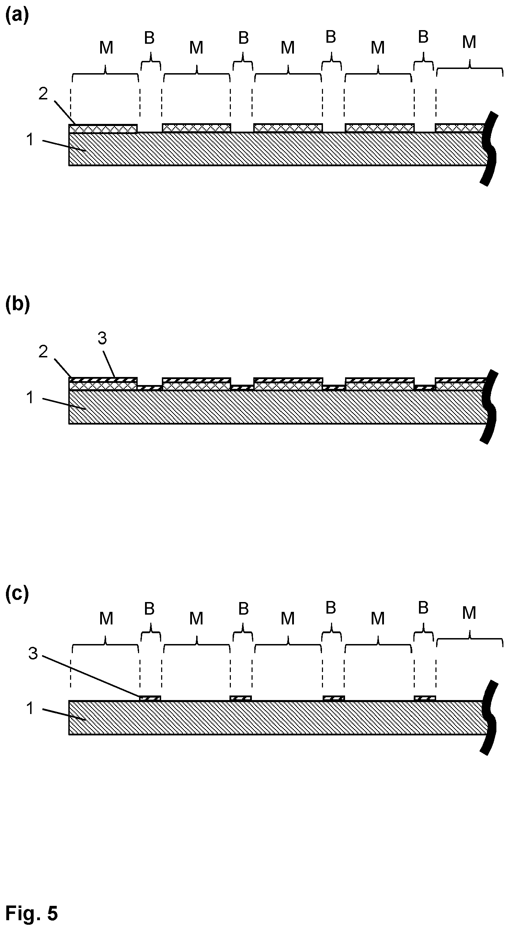

Fig. 5 zeigt eine Scheibe zu verschiedenen Zeitpunkten während einer Ausführungsform der erfindungsgemäßen Herstellung einer strukturierten Beschichtung am Beispiel des Glassubstrats 1 mit der strukturierten Maskierungsbeschichtung 2 aus Fig. 3. Das Verfahren ist aber gleichermaßen auch auf das Glassubstrat 1 aus Fig. 4 anwendbar. Zunächst wird das Glassubstrat 1 mit der Maskierungsbeschichtung 2 auf den Maskierungsbereichen M bereitgestellt (Teil a). Anschließend wird eine Funktionsbeschichtung 3 auf die gesamte Oberfläche des Glassubstrats 1 mit der Maskierungsbeschichtung 2 aufgebracht (Teil b), beispielsweise mittels magnetfeldunterstützter Kathodenzerstäubung (*Magnetronsputtern*)*.* Optional kann vor der Funktionsbeschichtung 3 noch eine Haftschicht oder eine sonstige Hilfsschicht aufgebracht werden. Danach wird das Glassubstrat 1 einer Temperaturbehandlung unterzogen, die beispielsweise im Rahmen eines thermischen Vorspannprozesses erfolgen kann, bei dem das Glassubstrat 1 auf eine Temperatur von beispielsweise 750 °C erwärmt wird und anschließend durch einen Luftstrom abgeschreckt wird. Bei dieser Temperaturbehandlung wird die polymere Maskierungsbeschichtung 2 zersetzt, so dass sie samt der darauf aufgebrachten Funktionsbeschichtung 2 von den Maskierungsbereichen M entfernt wird. Es verbleibt die strukturierte Funktionsbeschichtung 3 auf den Beschichtungsbereichen B (Teil c), wie sie beispielhaft in Fig. 1 dargestellt ist.

Soll die Funktionsbeschichtung 3 aus einem Metalloxid ausgebildet sein, beispielsweise Titanoxid, so kann mit der Kathodenzerstäubung das Metall als Vorstufe aufgebracht werden, welches dann während der Temperaturbehandlung zum Oxid oxidiert wird.

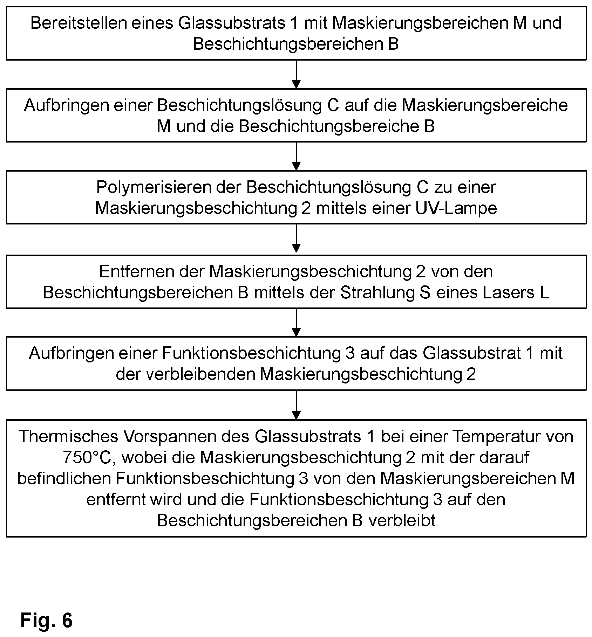

Fig. 6 zeigt eine Ausführungsform des erfindungsgemäßen Verfahrens anhand eines Flussdiagramms (erste bevorzugte Ausführungsform).

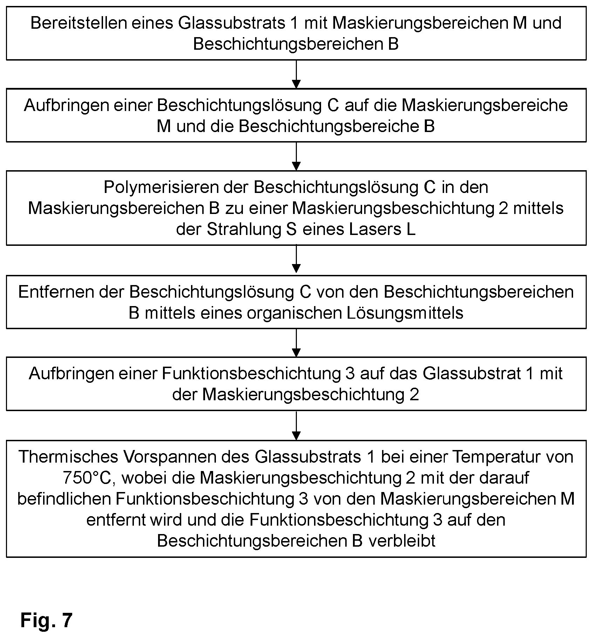

Fig. 7 zeigt eine weitere Ausführungsform des erfindungsgemäßen Verfahrens anhand eines Flussdiagramms (zweite bevorzugte Ausführungsform).

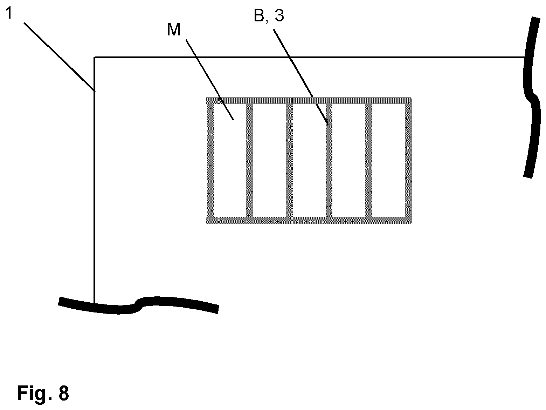

Fig. 8 zeigt beispielhaft einen Ausschnitt einer weiteren Scheiben mit einer strukturierten Beschichtung, die mit dem erfindungsgemäßen Verfahren hergestellt werden kann. Die Beschichtungsbereiche B mit der Funktionsbeschichtung 3 sind ähnlich wie in Fig. 1 in Form paralleler Linien angeordnet, allerdings nicht über die gesamte Oberfläche des Glassubstrats 1, sondern nur über einen Teilbereich. Außerdem sind zwei weitere Beschichtungsbereiche B vorhanden, die senkrecht zu der Mehrheit der Beschichtungsbereiche B verlaufen und deren Enden miteinander verbinden. Die Beschichtungsbereiche B bilden daher streng genommen einen zusammenhängenden Bereich, der jedoch in sich strukturiert ist und mehrere Maskierungsbereiche M umgibt.

### Beispiele

Es wurden Glassubstrate 1 (Kalk-Natron-Glas, 4 mm) mit strukturierten Maskierungsbeschichtungen 2 verschiedener Ausgestaltung versehen. Dabei wurde jeweils eine Oberfläche des Glassubstrats 1 vollflächig mit einer Maskierungsbeschichtung 2 überzogen, die als UV-härtender Acryllack ausgebildet war mit einer Schichtdicke von etwa 10 µm. Anschließend wurden die Beschichtungsbereiche B mittels eines Nd:YAG-Laser, der frequenzverdreifacht (355 nm) oder frequenzverdoppelt (532 nm) betrieben wurde, von der Maskierungsbeschichtung befreit. Die Beschichtungsbereiche B waren linienartig ausgebildet wie in Fig. 1 dargestellt, oder punktartig in Form einer Matrix wie in Fig. 2 dargestellt. Die Abmessungen der Beschichtungsbereiche B (Linienbreite beziehungsweise Durchmesser) wurden über einen Bereich von etwa 25 µm bis etwa 80 µm variiert, die Abstände benachbarter Beschichtungsbereiche B von etwa 80 µm bis etwa 500 µm.

In allen Beispielen konnte eine strukturierte Maskierungsbeschichtung 2 wie geplant erzeugt werden. Die Substrate 1 wurden anschließend mit einer 50 nm dicken Haftschicht aus Siliziumnitrid überzogen und dann mit einer 10 µm dicken Funktionsbeschichtung 3 aus Titan. Dann wurden die Glassubstrate 1 auf eine Temperatur von 750 °C erhitzt und thermisch vorgespannt. Bei dieser Temperaturbehandlung wurden die Maskierungsbeschichtung 2 in allen Fällen vollständig zersetzt und es verblieb eine oxidierte strukturierte Funktionsbeschichtung 3 aus Titanoxid.

### Bezugszeichenliste:

- (1): Glassubstrat
- (2): Maskierungsbeschichtung
- (3): Funktionsbeschichtung

- (M): Maskierungsbereich des Glassubstrats 1
- (B): Beschichtungsbereich des Glassubstrats 1

- (C): Beschichtungslösung

- (L): Laser
- (S): Strahlung des Lasers L
- (F): fokussierendes Element
- (B): beweglicher Spiegel

## Patentansprüche

1. Verfahren zur Herstellung einer Scheibe mit einer strukturierten Beschichtung, umfassend die folgenden Verfahrensschritte:
(a) Ausbilden einer organischen, polymeren Maskierungsbeschichtung (2) auf Maskierungsbereichen (M) einer Oberfläche eines Glassubstrats (1), wobei Beschichtungsbereiche (B) der Oberfläche des Glassubstrats (1) nicht mit der Maskierungsbeschichtung (2) versehen sind;
(b) Aufbringen einer Funktionsbeschichtung (3) auf die Oberfläche des Glassubstrats (1) mittels vakuumbasierter Gasphasenabscheidung; und
(c) Temperaturbehandlung des Glassubstrats (1) bei einer Temperatur von mindestens 200 °C, wodurch die Maskierungsbeschichtung (2) mit der darauf angeordneten Funktionsbeschichtung (3) von der Oberfläche entfernt wird, wobei die Funktionsbeschichtung (3) auf den Beschichtungsbereichen (B) der Oberfläche verbleibt,
**dadurch gekennzeichnet, dass** in Verfahrensschritt (a)
(I)
(a.1) eine organische Beschichtungslösung (C) auf die Maskierungsbereiche (M) und die Beschichtungsbereiche (B) aufgebracht wird,
(a.2) die Maskierungsbeschichtung (2) aus der Beschichtungslösung (C) gebildet wird, und
(a.3) die Maskierungsbeschichtung (2) mittels Laserstrahlung (S) von den Beschichtungsbereichen (B) entfernt wird,
oder
(II)
(a.1) eine organische Beschichtungslösung (C) auf die Maskierungsbereiche (M) und die Beschichtungsbereiche (B) aufgebracht wird,
(a.2) in den Maskierungsbereichen (M) mittels Laserstrahlung (S) die Maskierungsbeschichtung (2) aus der Beschichtungslösung (C) gebildet wird, und
(a.3) die Beschichtungslösung (C) von den Beschichtungsbereichen (B) entfernt wird.

2. Verfahren nach Anspruch 1, wobei die Beschichtungsbereiche (B) in Form eines regelmäßigen Musters angeordnet sind als zueinander parallele Linien oder punktförmig beziehungsweise kreisförmig in einer matrix- oder rasterartigen Anordnung und zwischen benachbarten Beschichtungsbereichen (B) ein Maskierungsbereich (M) angeordnet ist, und wobei die Breite der Beschichtungsbereiche (B) sowie die Abstände benachbarter Beschichtungsbereiche (B) von 10 µm bis 1 mm betragen.

3. Verfahren nach Anspruch 1 oder 2, wobei die Maskierungsbeschichtung (2) auf Basis eines UV-härtenden Lacks ausgebildet wird, insbesondere eines UV-härtenden Acryllacks.

4. Verfahren nach einem der Ansprüche 1 bis 3, wobei die Maskierungsbeschichtung (2) eine Dicke von 100 nm bis 20 µm aufweist.

5. Verfahren nach einem der Ansprüche 1 bis 4, durchgeführt in der Variante (I), wobei der Laser (L) gepulst betrieben wird mit einer Pulsenergie von 20 µJ/Puls bis 250 µJ/Puls, bevorzugt von 50 µJ/Puls bis 200 µJ/Puls.

6. Verfahren nach einem der Ansprüche 1 bis 4, durchgeführt in der Variante (I), oder nach Anspruch 5, wobei die Beschichtungsbereiche (B) in Form eines regelmäßigen Musters angeordnet sind als zueinander parallele Linien oder punktförmig beziehungsweise kreisförmig in einer matrix- oder rasterartigen Anordnung und die Breite der Beschichtungsbereiche (B) von 5 µm bis 100 µm beträgt und die Abstände benachbarter Beschichtungsbereiche (B) von 5 µm bis 1 mm.

7. Verfahren nach einem der Ansprüche 1 bis 4, durchgeführt in der Variante (II), wobei der Laser (L) gepulst betrieben wird mit einer Pulsenergie von 1 nJ/Puls bis 100 nJ/Puls.

8. Verfahren nach einem der Ansprüche 1 bis 4, durchgeführt in der Variante (II), oder nach Anspruch 7, wobei die Beschichtungslösung (C) in Verfahrensschritt (a.3) mit einem organischen Lösungsmittel entfernt wird.

9. Verfahren nach einem der Ansprüche 1 bis 4, durchgeführt in der Variante (II), oder nach Anspruch 7 oder 8, wobei die Beschichtungsbereiche (B) in Form eines regelmäßigen Musters angeordnet sind als zueinander parallele Linien oder punktförmig beziehungsweise kreisförmig in einer matrix- oder rasterartigen Anordnung und die Breite der Beschichtungsbereiche (B) von 5 µm bis 1 mm beträgt und die Abstände benachbarter Beschichtungsbereiche (B) von 5 µm bis 100 µm.

10. Verfahren nach einem der Ansprüche 1 bis 9, wobei die Funktionsbeschichtung (3) in Verfahrensschritt (b) mittels physikalischer Gasphasenabscheidung, bevorzugt mittels magnetfeldunterstützer Kathodenzerstäubung, aufgebracht wird.

11. Verfahren nach einem der Ansprüche 1 bis 10, wobei die Temperaturbehandlung in Verfahrensschritt (c) im Rahmen eines Vorspannprozesses erfolgt, bei dem das Glassubstrat (1) thermisch vorgespannt wird.

12. Verfahren nach einem der Ansprüche 1 bis 11, wobei das Glassubstrat (1) aus Kalk-Natron-Glas gefertigt ist mit einer Dicke von 2 mm bis 20 mm.

13. Verfahren nach einem der Ansprüche 1 bis 12, wobei die Funktionsbeschichtung (3) geeignet ist, das Glassubstrat (1) mit hydrophoben oder superhydrophoben Eigenschaften zu versehen, so dass der Kontaktwinkel eines Wassertropfens größer 90° beträgt, bevorzugt größer 150°, oder mit verbesserten optischen Eigenschaften zu versehen, so dass die Reflexionsfarbe, das Streuverhalten oder die Lichtabsorption des Glassubstrats (1) geändert wird.

## Claims

1. Method for producing a pane with a structured coating, comprising the following process steps:
(a) forming an organic, polymeric masking coating (2) on masking regions (M) of a surface of a glass substrate (1), with coating regions (B) of the surface of the glass substrate (1) not being provided with the masking coating (2);
(b) applying a functional coating (3) to the surface of the glass substrate (1) by means of vacuum-based vapor deposition; and
(c) temperature treatment of the glass substrate (1) at a temperature of at least 200 °C, as a result of which the masking coating (2) with the functional coating (3) applied thereto is removed from the surface, the functional coating (3) remaining on the coating regions (B) of the surface,
**characterised in that** in method step (a)
(I)
(a.1) an organic coating solution (C) is applied to the masking regions (M) and the coating regions (B),
(a.2) the masking coating (2) is formed from the coating solution (C), and
(a.3) the masking coating (2) is removed from the coating regions (B) by means of laser radiation (S),
or
(II)
(a.1) an organic coating solution (C) is applied to the masking regions (M) and the coating regions (B),
(a.2) in the masking regions (M), the masking coating (2) is formed from the coating solution (C) by means of laser radiation (S), and
(a.3) the coating solution (C) is removed from the coating regions (B).

2. Method according to claim 1, wherein the coating regions (B) are arranged in the form of a regular pattern as parallel lines or in a dot-like or circular manner in a matrix- or grid-like arrangement and a masking region (M) is arranged between adjacent coating regions (B), and wherein the width of the coating regions (B) and the distances between adjacent coating regions (B) are from 10 µm to 1 mm.

3. Method according to claim 1 or 2, wherein the masking coating (2) is formed on the basis of a UV-curing lacquer, in particular a UV-curing acrylic lacquer.

4. Method according to one of claims 1 to 3, wherein the masking coating (2) has a thickness of 100 nm to 20 µm.

5. Method according to one of claims 1 to 4, carried out in variant (I), wherein the laser (L) is operated in pulsed mode with a pulse energy of 20 µJ/pulse to 250 µJ/pulse, preferably from 50 µJ/pulse to 200 µJ/pulse.

6. Method according to one of claims 1 to 4, carried out in variant (I), or according to claim 5, wherein the coating regions (B) are arranged in the form of a regular pattern as parallel lines or in a dot-like or circular manner in a matrix- or grid-like arrangement and the width of the coating regions (B) is from 5 µm to 100 µm and the distances between adjacent coating regions (B) are from 5 µm to 1 mm.

7. Method according to one of claims 1 to 4, carried out in variant (II), wherein the laser (L) is operated in pulsed mode with a pulse energy of 1 nJ/pulse to 100 nJ/pulse.

8. Method according to one of claims 1 to 4, carried out in variant (II), or according to claim 7, wherein the coating solution (C) in method step (a.3) is removed using an organic solvent.

9. Method according to one of claims 1 to 4, carried out in variant (II), or according to claim 7 or 8, wherein the coating regions (B) are arranged in the form of a regular pattern as parallel lines or in a dot-like or circular manner in a matrix- or grid-like arrangement and the width of the coating regions (B) is from 5 µm to 1 mm and the distances between adjacent coating regions (B) are from 5 µm to 100 µm.

10. Method according to one of claims 1 to 9, wherein the functional coating (3) is applied in method step (b) by means of physical vapour deposition, preferably by means of magnetic field-assisted cathode sputtering.

11. Method according to one of claims 1 to 10, wherein the temperature treatment in method step (c) takes place within the framework of a prestressing process in which the glass substrate (1) is thermally prestressed.

12. Method according to one of claims 1 to 11, wherein the glass substrate (1) is made of soda-lime glass with a thickness of 2 mm to 20 mm.

13. Method according to one of claims 1 to 12, wherein the functional coating (3) is suitable for providing the glass substrate (1) with hydrophobic or superhydrophobic properties, such that the contact angle of a water droplet is greater than 90°, preferably greater than 150°, or for providing it with improved optical properties, such that the reflection colour, scattering behaviour or light absorption of the glass substrate (1) is changed.

## Revendications

1. Procédé de fabrication d'une vitre comportant un revêtement structuré, comprenant les étapes de procédé suivantes :
(a) formation d'un revêtement de masquage (2) polymère organique sur des zones de masquage (M) d'une surface d'un substrat en verre (1), dans lequel des zones de revêtement (B) de la surface du substrat en verre (1) ne sont pas pourvues du revêtement de masquage (2) ;
(b) application d'un revêtement fonctionnel (3) sur la surface du substrat en verre (1) au moyen d'un dépôt en phase vapeur sous vide ; et
(c) traitement thermique du substrat en verre (1) à une température d'au moins 200 °C, moyennant quoi le revêtement de masquage (2) est enlevé, avec le revêtement fonctionnel (3) disposé sur celui-ci, de la surface, dans lequel le revêtement fonctionnel (3) reste sur les zones de revêtement (B) de la surface,
**caractérisé en ce que,** à l'étape de procédé (a),
(I)
(a.1) une solution de revêtement (C) organique est appliquée sur les zones de masquage (M) et les zones de revêtement (B),
(a.2) le revêtement de masquage (2) est formé à partir de la solution de revêtement (C), et
(a.3) le revêtement de masquage (2) est enlevé des zones de revêtement (B) au moyen d'un rayonnement laser (S),
ou
(II)
(a.1) une solution de revêtement (C) organique est appliquée sur les zones de masquage (M) et les zones de revêtement (B),
(a.2) dans les zones de masquage (M), au moyen d'un rayonnement laser (S), le revêtement de masquage (2) est formé à partir de la solution de revêtement (C), et
(a.3) la solution de revêtement (C) est éliminée des zones de revêtement (B).

2. Procédé selon la revendication 1, dans lequel les zones de revêtement (B) sont disposées sous forme de motif régulier, sous forme de lignes parallèles entre elles ou sous forme de point ou de cercle dans une disposition de type matrice ou trame, et une zone de masquage (M) est disposée entre des zones de revêtement (B) adjacentes, et dans lequel la largeur des zones de revêtement (B) ainsi que les distances entre des zones de revêtement (B) adjacentes vont de 10 µm à 1 mm.

3. Procédé selon la revendication 1 ou 2, dans lequel le revêtement de masquage (2) est réalisé à base d'une laque durcissant aux UV, en particulier une laque acrylique durcissant aux UV.

4. Procédé selon l'une des revendications 1 à 3, dans lequel le revêtement de masquage (2) présente une épaisseur de 100 nm à 20 µm.

5. Procédé selon l'une des revendications 1 à 4, mis en oeuvre dans la variante (I), dans lequel le laser (L) fonctionne de manière pulsée avec une énergie d'impulsion de 20 µJ/impulsion à 250 µJ/impulsion, de préférence de 50 µJ/impulsion à 200 µJ/impulsion.

6. Procédé selon l'une des revendications 1 à 4, mis en oeuvre dans la variante (I), ou selon la revendication 5, dans lequel les zones de revêtement (B) sont disposées sous forme de motif régulier, sous forme de lignes parallèles entre elles ou sous forme de point ou de cercle dans une disposition de type matrice ou trame, et la largeur des zones de revêtement (B) va de 5 µm à 100 µm et les distances entre des zones de revêtement (B) adjacentes vont de 5 µm à 1 mm.

7. Procédé selon l'une des revendications 1 à 4, mis en oeuvre dans la variante (II), dans lequel le laser (L) fonctionne de manière pulsée avec une énergie d'impulsion de 1 nJ/impulsion à 100 nJ/impulsion.

8. Procédé selon l'une des revendications 1 à 4, mis en œuvre dans la variante (II), ou selon la revendication 7, dans lequel la solution de revêtement (C) est éliminée à l'étape de procédé (a.3) avec un solvant organique.

9. Procédé selon l'une des revendications 1 à 4, mis en œuvre dans la variante (II), ou selon la revendication 7 ou 8, dans lequel les zones de revêtement (B) sont disposées sous forme de motif régulier, sous forme de lignes parallèles entre elles ou sous forme de point ou de cercle dans une disposition de type matrice ou trame, et la largeur des zones de revêtement (B) va de 5 µm à 1 mm et les distances entre des zones de revêtement (B) adjacentes vont de 5 µm à 100 µm.

10. Procédé selon l'une des revendications 1 à 9, dans lequel le revêtement fonctionnel (3) est appliqué à l'étape de procédé (b) au moyen d'un dépôt en phase vapeur physique, de préférence au moyen d'une pulvérisation cathodique assistée par un champ magnétique.

11. Procédé selon l'une des revendications 1 à 10, dans lequel le traitement thermique à l'étape de procédé (c) est effectué dans le cadre d'un processus de trempe au cours duquel le substrat en verre (1) est trempé thermiquement.

12. Procédé selon l'une des revendications 1 à 11, dans lequel le substrat en verre (1) est fabriqué à partir de verre sodocalcique comportant une épaisseur de 2 mm à 20 mm.

13. Procédé selon l'une des revendications 1 à 12, dans lequel le revêtement fonctionnel (3) est apte à pourvoir le substrat en verre (1) de propriétés hydrophobes ou superhydrophobes de sorte que l'angle de contact d'une goutte d'eau est supérieur à 90°, de préférence supérieur à 150°, ou à le pourvoir de propriétés optiques améliorées de sorte que la couleur de réflexion, le comportement de diffusion ou l'absorption de lumière du substrat en verre (1) est modifié.
